# EUROPEAN PATENT APPLICATION

(11) **EP 3 162 743 A1**
(43) Date of publication of application: **03.05.2017**
(21) Application number: 15191582.4
(22) Date of filing: 27.10.2015
(51) Int. Cl.: B65G 57/00

(54) **REMOTE CENTRALIZED PALLETIZING SYSTEMS AND METHODS THEREOF**

(71) Applicant: Avanti Software LTd, Derbyshire SK23 7SW (GB)
(72) Inventor: Vanhoutte, Jan, 8810 Lichtervelde (BE); Mander, Simon, Derbyshire, Derbyshire SK23 7SW (GB)
(74) Representative: BiiP cvba

(57) **Abstract**

The present invention discloses systems and methods for remote centralizing palletizing. According to some embodiments, the system includes a plurality of stations (320, 330, 340). Each station performs at least one operation associated therewith. The operation is selected from a list of operations comprising separating and/or layering/loading. Each of the plurality of said stations (320, 330, 340) is connected and configured to provide an input for any of the other of the plurality of stations (320, 330, 340) to any of the other operations.

## Description

### Field of Invention

The present invention relates generally to palletizing systems and methods thereof. More particularly, the present invention relates to remotely centralized palletizing systems and methods thereof.

### Background of the Invention

In the large scale production of wrapped or unwrapped products, such as food items, tiles, compact disks (CDS) or other relatively flat products or packages it is often desirable to arrange groups of individual items into stacks and packed in corrugated boxes. Thus, there is a high demand for the corrugated boxes. Manufacturing of such boxes involves a number of steps, and installation of heavy machinery equipment. A general process for manufacturing the corrugated boxes involves manufacturing of flat sheets of corrugated board, cutting products such as trays or boxes from one sheet as per the desired pattern, separating stacks of individual bundles of the products, followed by formation and palletizing the produced boxes onto wooden pallets; and subsequently strapping. As the user's demand is increasing, the machinery needs to be highly efficient for palletizing the produced boxes of very high quality with ZERO defects. A number of machinery equipments involve with each step of the general process. The machinery equipments such as die cutters accept a corrugated sheet. The die cutter uses a die to cut several trays or similar products from one sheet. The cut trays still together in one sheet are then delivered in stacks, for example, 15 to 100 sheets per stack. Such piles of sheets are separated further into bundles, using separators. The separated stacks are then palletized with a palletizing device or manually. In some instances, converters such as inliners or Flexo Folder Gluer (FFG) are fast systems that can produce 10,000-24,000 boxes per hour. Such systems do not require separators, however has counter ejector allowing the boxes to count and stack on top of each other and strapped. The stacks are then palletized with a palletizing device or manually.

Though the machinery equipments are well known and developed, however efforts are persistently still on for increasing efficiency of machinery equipments, saving cost and time with increased productivity. Also, to meet high demands and quality, such processes cannot be performed manually, thus automatic machinery is installed in the corrugated plants including automatic loading devices. For example, some modern factories are equipped with automatic material handling systems along with automatic palletizer, delivering the stacks with automatic transfer cars. Some factories have fork lift trucks; some have robotic arms, and so on. However, existing automatic palletizer cannot work fast enough to follow the converters at maximum capacity for all the products that the converters can produce. Similar problem exists with automatic separators also. For example, existing separating device separates with one machine across the die, and with the second machine in the feed direction. When there is a need to increase efficiency, the number of trays is increased across the die as well as in the feed direction. In case the end user wants few trays per bundle, capacity of the separator across the die becomes full; and the separator sits almost idle in the feed direction.

Further, though layer formation process works well, however if end user wants some of the boxes turned with the next layer mirrored, then several in horizontal plane, capacity of layer formations can drop with over 75%, slowing down the main converter.

The layer loading device places the produced layers of boxes on top of each other. Though such device is fast enough as long as there are many stacks per layer, however the device becomes very slow especially when bigger boxes are produced even with few layers per load. Thus, there is a need for high input to give high output faster with ZERO defects, however with less number of machinery equipments installed.

Also, working of the equipments- separator, layer formation and layer loading device depend on a number of variables defined by the user. When one of the three equipments is a bottleneck, the other two are under performing or waiting, thus similarly followed on converter line.

Currently, almost every converter has its own automatic palletizing system, and own separator system for die cutters. A large amount of space and money are needed for installing such machinery equipments. For the same reason, there is reluctance for installing automatic devices for slower or older machines, or specific machines which are not used all the time. On the other hand, manual palletizing slows down a major converter dramatically, increasing the cost per box.

In some instances, end users producing consumer goods, change and develop their products more rapidly and more frequently, and have a less stock of packaging material. The marketing departments of the end users change their message very rapidly to make promotions and to diversify their goods. They require also JIT delivery to reduce costs and increase flexibility towards their own customers. Thus, the box maker gets very small batches to produce, only a few thousand per batch, with convertors being able to run at 2 to 8 times that many boxes per hour. Thus, at every job change, the convertor needs to be adjusted, requiring between 10 and 20 minutes per set up. The operator needs to change the tie and bottom sheet at each step, sometimes the empty pallet and more. The separator and palletizing devices also need to be set up, thereby increasing the set up time.

Further to become eye catchers, today's end user wants attractive corrugated boxes, for example printing beautiful pictures on all sides of the box. Such printing requires high definition of the printing. Also the box itself must be finished in high quality, with perfect scores and folding, avoiding scrap and angel hair at all cost. End users fill the boxes more and more with automatic machines, so that entrance quality control at the end user becomes seldom, resulting in the need of delivering perfect boxes in dimension, quality, color and more. The operators of the convertors therefore become more printer operators than regular machine operators. A large part of time also needs to be spent on QC. The installation of end of line auxiliary equipment on each convertor line, in combination with reducing the number of people per line as, good time spent on auxiliary equipment, reduces the time available for QC. Hence, it results in lower quality delivered with goods returned, or adding additional operators with additional costs, making a company less competitive.

In some other instances, the complexity and accessibility related to individual palletizing lines influences the material handling system ( manual or automatic ), as different equipments ( tie sheets, bottom sheets, pallet labels and more ) need to be replaced frequently.

Thus, there exists a need for developing a system and/or method for palletizing which can eliminate the automatic or manual palletizing at every converter line and waiting at converter line, increasing productivity at faster pace, saving time and money. Also the system needs to be developed, should be easily installable and requiring less space and investment.

### Summary of the Invention

The present invention discloses techniques that optimize palletization process for a corrugated industry at a designated location and at a high speed. In one embodiment, the present invention discloses a palletizing system. The system includes a plurality of stations. Each station performs at least one operation associated therewith. The operation is selected from a list of operations comprising separating and/or layer formation and/or layer loading. Each of the plurality of said stations is connected and configured to provide an input for any of the other of the plurality of stations to any of the other operations. The system further includes a control section that traces / tracks / handles the flow of any material within the system at any particular moment.

According to yet another illustrative embodiment of the present invention, a method for remotely centralizing the palletizing of corrugated products is disclosed. The method includes receiving infeed from a converting line of a corrugator system to a designated location. The designated location includes a plurality of separator stations. Each of the plurality of the separator systems includes at least one separator across the infeed direction, connected to and one or more separators across one or more out feed direction. The designated location further includes a plurality of layer formation stations for handling / turning infeed bundles to form layering thereof. The designated location also includes a plurality of layer loading devices for loading multiple stacks at one time. The infeed from the converting line to the designated location is received at separators stations / layer formation stations as required. The output from each of the plurality of said stations is fed to at least one of the other of the plurality of stations to any of the other operations. The product when prepared according to the requirements is fed to loading stations where they are stacked and palletized.

Accordingly, it is an object of the present invention to remotely optimize and control the operations of the palletizing process. This is achieved by the use of a control section which includes software for tracing / tracking / handling the operations of the palletizing system of current invention.

It is yet another objective of the present invention to eliminate stops/interruptions/long stops/jams at within the system caused by defects / break down / maintenance operations at any of the station / downstream equipments.

It is yet another objective of the present invention to allow the operations of converters to run at maximum capacity regardless of the requirements of a client by maximizing the capacity of each of the individual stations such as separators / layer formation stations and loading stations.

It is yet another objective of the present invention to provide a new and improved system / method for managing the operations of palletizing at a very high speed wherein the new system/method can be installed/applicable to currently used equipments / factories / operations thereby reducing the costs, improving the quality of output and still providing maximum job satisfaction to the operators.

### Brief Description of drawings

Other objects, features, and advantages of the invention will be apparent from the following description when read with reference to the accompanying drawings. In the drawings, wherein like reference numerals denote corresponding parts throughout the several views:
Figure 1 illustrates a prior art depicting a standard factory with separating/layer formation/palletizing systems on each line;
Figure 1A illustrates a prior art depicting an exploded view of the separating/layer formation/palletizing systems; Figure 1B illustrates a prior art of a standard separating device with one exit; Figure 1C illustrates a prior art of a standard layer formation device;
and Figure 1D illustrates a prior art of a standard layer loading device with one loading position;
Figure 2 illustrates a block diagram for a palletizing system, according to an embodiment of the present invention;
Figure 3 illustrates an exemplary palletizing system, according to an embodiment of the present invention;
Figure 4 illustrates an exploded view displaying a connection between die cutters and separators, according to an embodiment of the present invention;
Figure 5 illustrates an exploded view of a double separating station with two exit portions, according to an embodiment of the present invention;
Figure 6 illustrates an exploded view of a layer formation stations, according to an embodiment of the present invention;
Figure 7 illustrates an exploded view of a layer loading stations, according to an embodiment of the present invention;
Figure 8 illustrates an exploded view of a layer loading station with two loading positions, according to an embodiment of the present invention;
Figure 9 shows a schematic of a flowchart depicting a method for remotely centralizing palletization, according to another embodiment of the present invention.

### Detailed Description of the Preferred Embodiments

Reference will now be made in detail to the preferred embodiments of the present invention, examples of which are illustrated in the accompanying drawings.

In the following detailed description, numerous specific details are set forth in order to provide a thorough understanding of the invention. However, it will be understood by those or ordinary skill in the art that the invention may be practiced without these specific details. In other instances, well known methods, procedures and/or components have not been described in detail so as not to obscure the invention.

The invention will be more clearly understood from the following description of the methods thereof, given by way of example only with reference to the accompanying drawings. In the descriptions that follow, like numerals represent like elements in all figures. For example, where the numeral (2) is used to refer to a particular element in one figure, the numeral (2) appearing in any other figure refers to the same element.

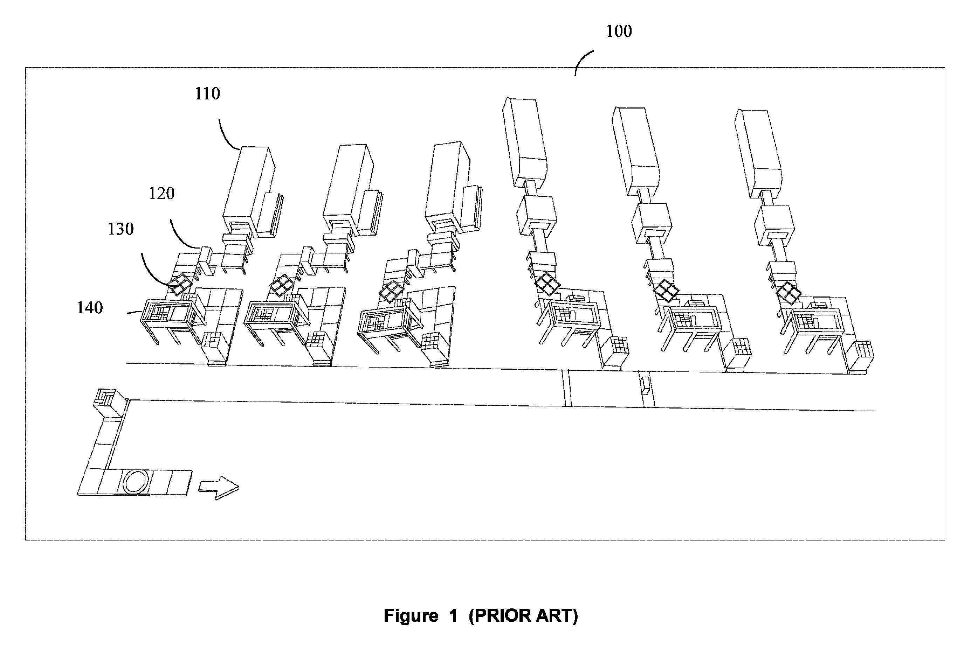

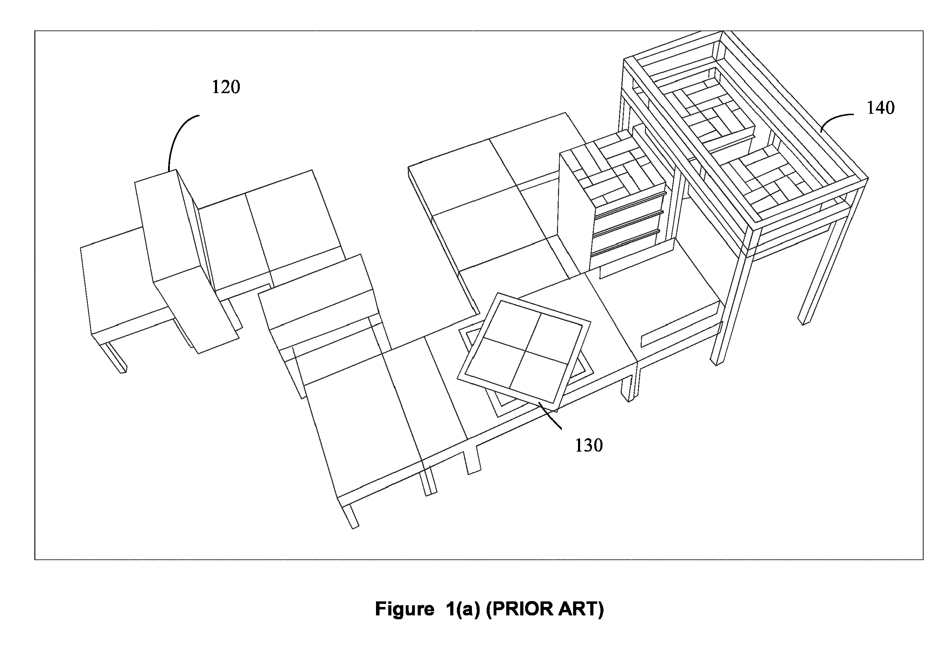

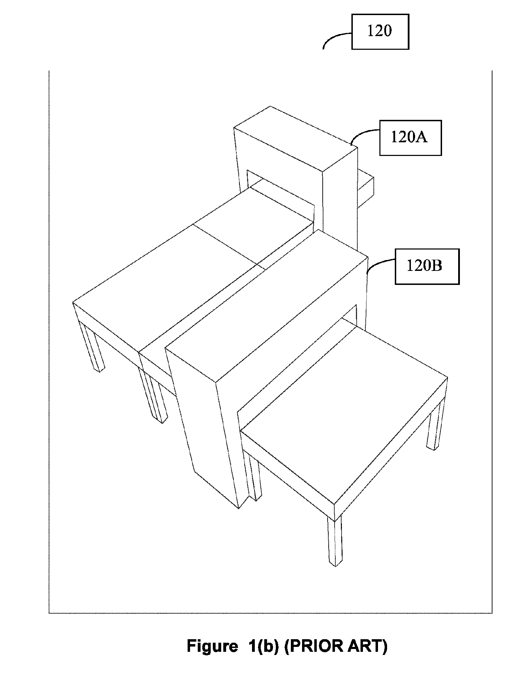

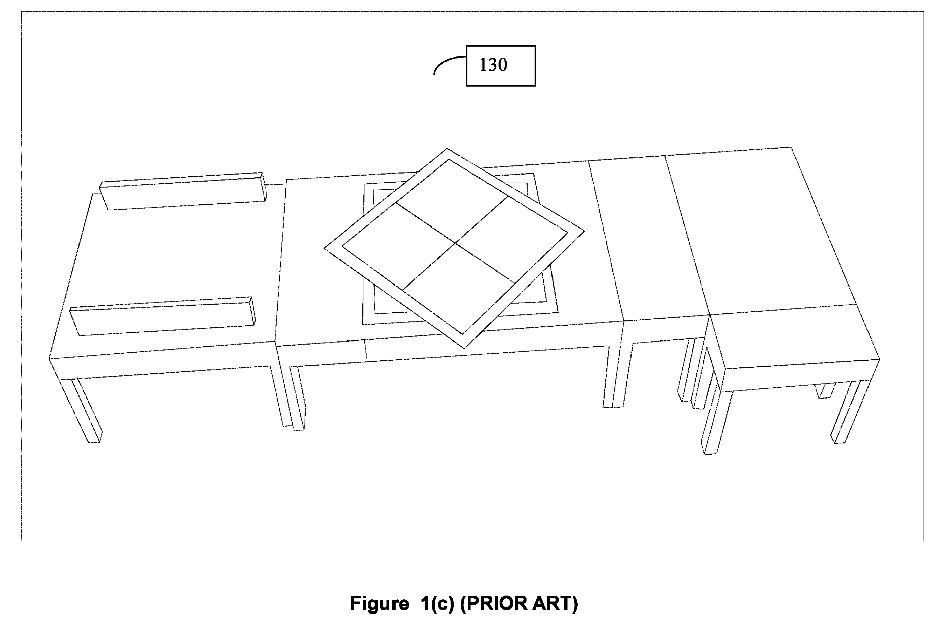

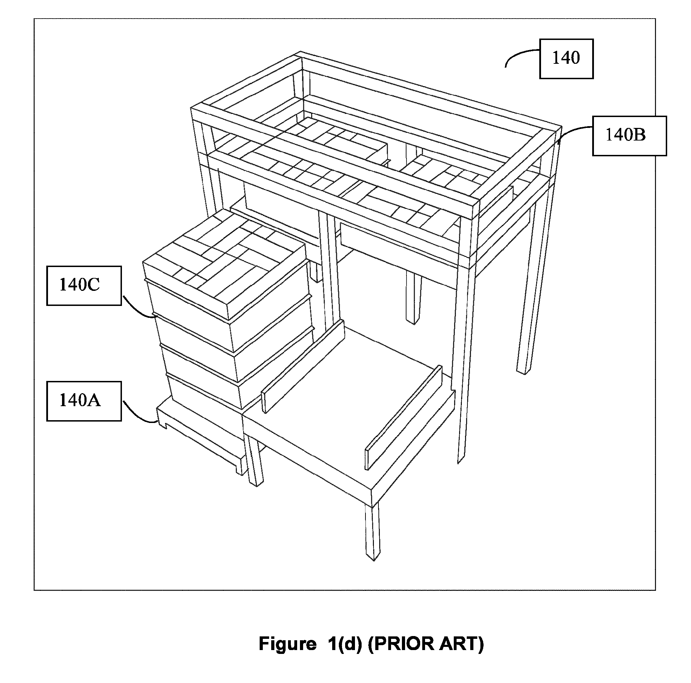

Corrugated products, for example, boxes, trays, and so on require different machinery equipment for their manufacturing. Corrugated plants for manufacturing corrugated products involve machinery equipments such as converters, separators, layer formation device, layer loading systems, and so on, as shown in Figure 1 (PRIOR ART). The manufacturing process involves making a plain sheet into a corrugated sheet using corrugators. Some manufactures manufacture the corrugated sheets in their plants; however other manufacturers get them readymade. The corrugated sheets undergo cutting as per the end user's desired requirements. The cut sheets are processed and converted to corrugated products using converters 110, as shown in Figure 1. The corrugated sheet bundles are separated in individual bundles at separator section 120, followed by layer formation in layer formation device or section 130, which further goes for loading and stacked in columns in layer loading section 140. Figure 1A (PRIOR ART) illustrates an exploded view of the separator, the layer formation device, and the layer loading device. In the prior art, the converter 110 has one row downstream for transporting, packaging and loading the corrugated product. For example, as shown in Figure 1, one converter has one row having one separator, followed by one layer formation device, and subsequently one layer loading device. Further, as shown in Figure 1B, the prior art depicts the separator 120 which separates the stacks of individual bundles of corrugated sheets. The separator 120 includes one front separator 120 A for receiving the stack from the converter or die cutter and a back separator 120 B to further separate the rows of trays received from the front separator 120A. Thus, the separator station 120 has only one exit through the back separator 120B for making the corrugated product to egress there through. Figure 1C illustrates an exploded view of the layer formation device 130. Further, as shown in Figure 1D, the layer loading device 140 has one loading position 140 C wherein one pallet is beneath the stack of corrugated product. The stacks are arranged in columns, shown as 140 B.

Some conventional arts handle transportation and loading manually or automatically. Some arts involve forklift trucks for loading while some arts involve robotic arms, as already discussed above. However, process steps for transportation and loading remain almost similar. As the converter has a common down line for separation, layer formation, layer loading, there may be chances of bottleneck at any of the sections, resulting in stops or interruptions. Hence, it may affect productivity and cost. Further, the separator has only one exit and layer loading device has only one loading position, which limits the productivity. Also if the end user requires the products to be stacked in different planes, then also it requires resetting of the equipments, hence consuming more time and effort. Thus the present invention discloses palletizing system which eliminates the automatic or manual palletizing at every converter row, and centralizes the operations in a specific designated location.

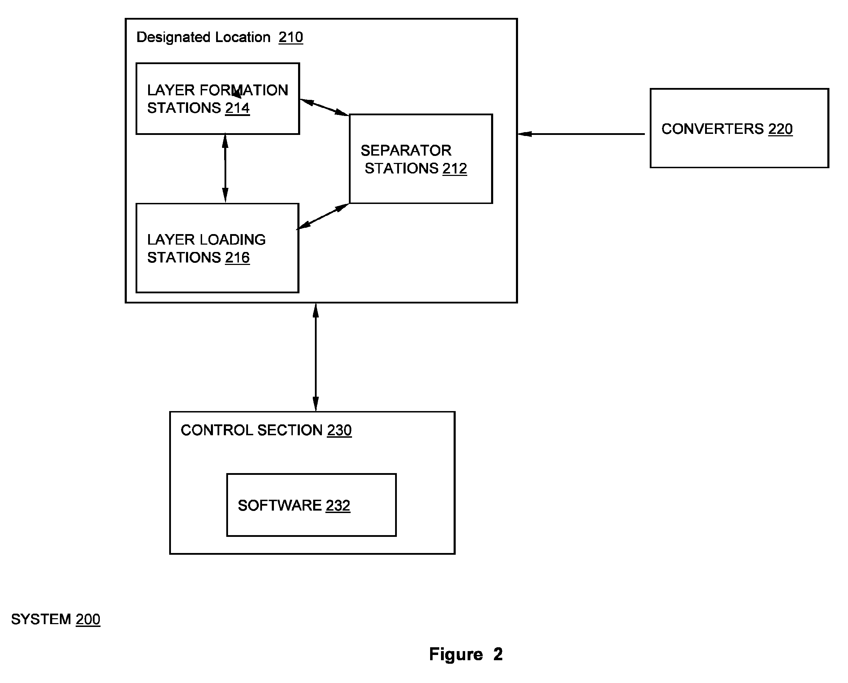

Figure 2 illustrates a block diagram depicting a palletizing system according to the present invention. As shown in the fig. 2 the system 200 includes a plurality of stations such as plurality of separator stations 212, a plurality of layer formation stations 214, and a plurality of layer loading stations 216, organized in a centralized designated location 210. Each of the plurality of stations is connected to one or more stations and may provide an input to any of a connected station. In an embodiment, the stations of the system are connected to each other via automatic conveyors systems (not shown in fig.). The system of the present invention is connected to a plurality of converters 220 of a corrugator system via automatic conveyors such that the out feed from any of the converters may be fed to any of the connected stations at the designated location. In an embodiment of the present invention, the converter may be a type of a die cutter such as rotary die cutter, flat bed die cutter, or the like. In another embodiment of the invention, the converter providing the input feed to the palletizing system may be a Flexo Folder Gluer (FFG). In yet another embodiment of the invention, the converter may be any of the converters known in the art (e.g. for example laser cutters). The number of stations for a particular operation is independent of the number of stations for any other operations. Further, the number of the stations for a particular operation is also independent of the number of converters connected to the designated location of palletizing system. For example - a system associated to one converter may include one or more separators, one or more layer formation stations and one or more layer loading stations. In another example, a system associated to at least two converters may include one separator, one or more layer formation stations and one or more layer loading stations. The system further includes a control section 230 connected to the designated location 210. The control section is configured to track / trace / handle operations of each of the plurality of stations and any other equipment present of the designated location 210.

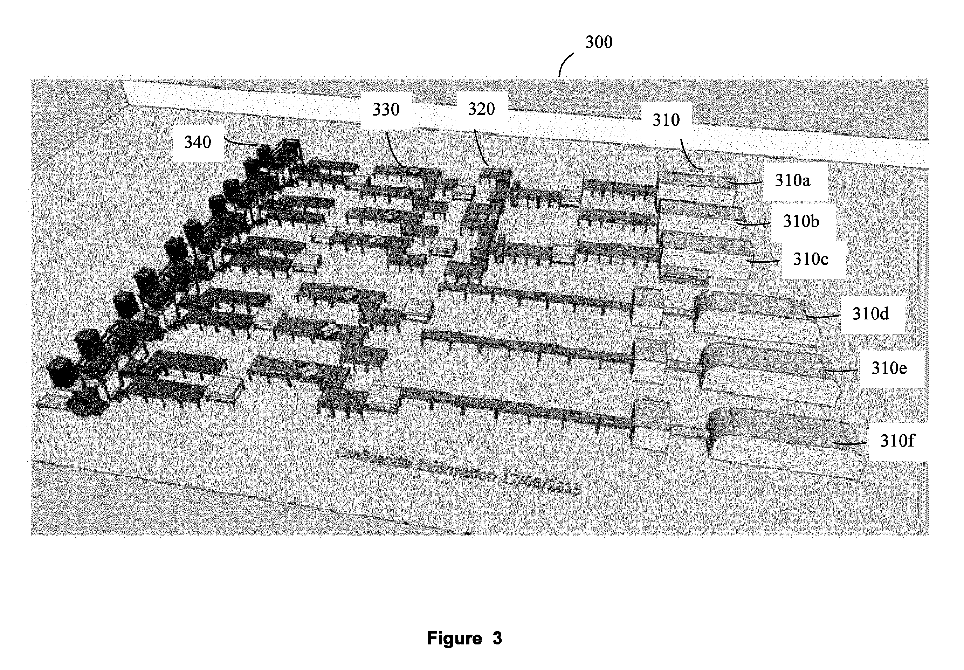

As an example, fig. 3 illustrates an exemplary palletizing system, according to an embodiment of the present invention. The exemplary system includes converters 310, separators 320, layer formation stations 330, and layer loading stations 340. The converters 310 include three die cutters 310a, 310b, 310c and three FFG 310d, 310e, 310f. The separators 320 include two separators 320a and 320b. The plurality of layer formation stations 330 includes seven layer formation stations 330a - 330g. The plurality of layer loading stations 340 includes five layer loading stations 340a - 340e.

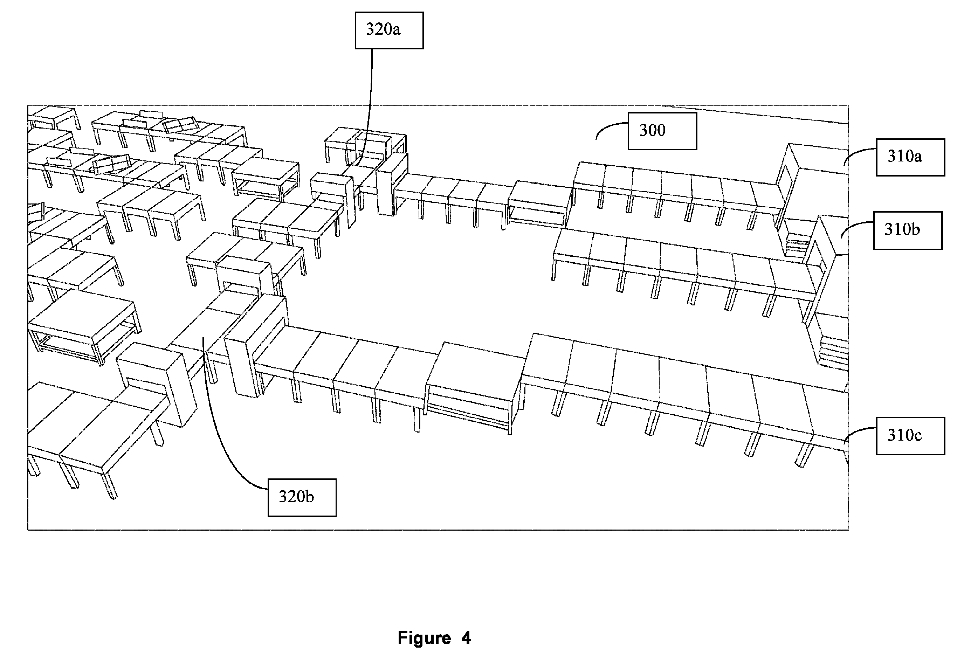

Fig 4 shows an exploded view of the die cutters of converters 310 connected to separators 320. The die cutters 310a and 310b are connected to the separator 320a whereas the die cutter 310c is connected to the separator 320b. During the process of corrugation, a stack of sheets received from a corrugator system (not shown) is fed to die cutters. The die cutters convert the incoming corrugated sheets to a pile of trays nicked together. According to some embodiments, die cutter used may be any of die cutters known in the art such as rotary, flatbed, or the like.

According to one embodiment, the pile of trays received from each of the die cutters 310 of the corrugator system are transferred to corresponding separators 320 connected thereto. For example, the output from any of the die cutters 310a and 310b may be fed to the separator 320a and the output of the die cutter 310c may be fed to separator 320b for further processing. The separator 320a and 320b as displayed in figure 4 are separators with two exit portions which are configured to separate the trays received from the die cutters 310.

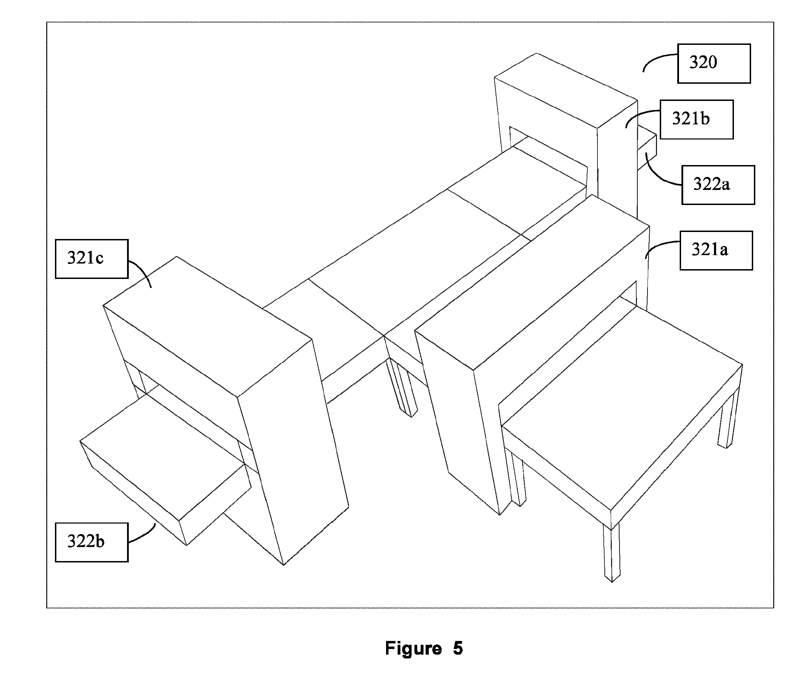

Fig. 5 illustrates an exploded view of the separator station 320. The separator station 320 includes a front separator 321 a for receiving the piles of trays out feed by the die cutters 310. The separator station further includes two back separators 321 b and 321 c that receive the rows of piles separated by the front separator 321 a. In an embodiment of the present invention, the front separator 321a is configured to separate trays from the piles across the die cutter 310 into rows. The back separators 321b and 321c are configured to receive the rows of trays from the front separator 321 a and separate them further into individual stacks/bundles. In some embodiments, the back separators 321b and 321c are arranged at right angles to the front separator 321a. In some other embodiments, the back separators 321b and 321 c may be arranged into different configuration as desired. Accordingly, the separator station 320 has two exit portions 322a and 322b, which allow the separated stacks/bundles of trays to egress there through, thus delivering two rows of products at one time. According to some embodiments, the separator station 320 can be a single exit type separator which is very well known in the art and has been illustrated in figure 1(b), thereby enabling the utilization of currently available separator system within the new system disclosed in present invention. However, the use of two exit type separator station is preferred as the latter improves the capacity of the separation operation. Accordingly, the Separators stations 320 do not require waiting during set up of converters and therefore may be used to perform the separation operation for the piles of trays received from other die cutters connected thereto.

As displayed in fig. 4, each of the exit portions 322a and 322b of the separator station 320 may be connected to one or more layer formation stations 330. Accordingly, the output feed from the plurality of separator stations 320 may be received at any of the connected layer formation stations from the plurality of layer formation stations 330.

As shown in fig. 3, the converters 310 further include three FFG units 310d, 310e and 310f. The FFG units are already known in the art and does not need separator for their operation. Accordingly, the FFG type converters 310d, 310e and 310f are connected to the designated location at layer forming stations 330.

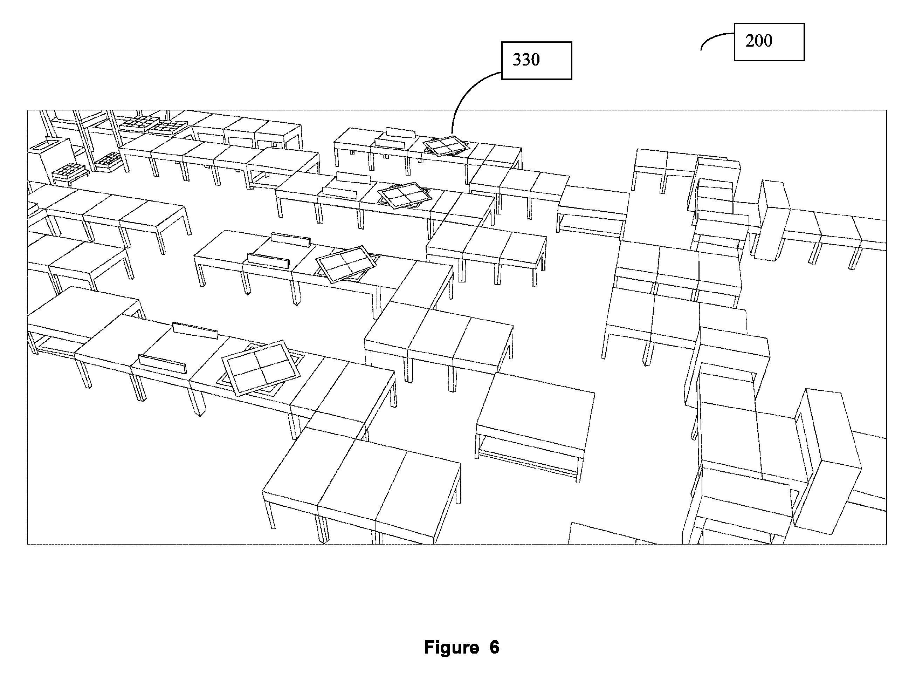

Figure 6 illustrates a plurality of layer formation stations 330 installed at the designated location for palletization system. The layer formation stations 330 are configured to orient the stack of trays/boxes received at its infeed by turning the trays/boxes at a desired angle and positioning against each other as per the requirements. For Instance, examples of different angles may include, but are not limited to 90°, 180°, 270°, 360°, and so on. According to some embodiments, the layer formation stations 330 can handle products received from any type of converters such as a die cutter, FFG, etc. In some embodiments, one or more layer formation stations 330 may receive stacks of trays from one or more out feed of the separators 320 associated to die cutters 310. The number of layer formation stations associated/connected to separator stations is independent of the number of converters associated with the separator stations. Alternatively, one or more layer formation stations 330 may receive boxes from the FFG of converters 310 of the corrugator system connected thereto. In some embodiments, a single FFG may be connected to two or more layer formation stations. In some other embodiments, two or more FEG may be connected to a common layer formation stations. The layer formation stations 330 may have a capacity for handling multiple bundles at a time. In some embodiments, the layer formation stations 330 may be configured for handling multiple in feeds at a same time. Accordingly, the layer formation stations 330 may have a capability to handle different types of products simultaneously. For instance, one of the plurality of layer formation stations is connected to, different converters, providing products of different kinds. Accordingly, the layer formation station 330 may also form layer from intermixed products of different types.

In some embodiments, when there is no infeed available at some period of time at one of a layer forming station, then the station 330 may be configured to receive infeed from another converters, which were originally meant to be received at some other layer formation station within the system, thereby avoiding any stops or delays. Accordingly, the layer formation stations may be configured to share their capacity with other layer formation stations of the system to handle infeed from one or more converters/separators. For Instance, in-feeds coming from some converters may be handled swiftly by the layer formation stations; while infeed coming from some may take time for the layer formation depending upon the conditions such as design of the box, layering requirements at the client end, or the like. Thus, to manage the delays because of the slower process at one station, the capacity of the layer formation stations may be shared to avoid overall delay/jams etc within the system.

In some other embodiments, the layer formation stations 330 include a buffer section. The buffer section is configured to accommodate the storage of bundles of trays/boxes if required. As an example, if infeed available at a layer formation station 330 is less than the minimum number of bundles required for the layer formation as per the requirements, the bundles of trays are stored in the buffer till the next delivery of the corresponding bundle of trays. In some embodiments, the buffer may be executed by providing a side exit to the infeed bundles to a waiting position. In such instances, the bundles are redirected to infeed upon arrival of new bundles. In some other embodiments, the buffer may be executed by temporarily lifting the infeed bundles using lifting devices such as forks, fingers etc. In such instance, when additional bundles of trays are received at infeed, the lifting device is lowered and the bundles are put on the infeed to enable the layer formation process.

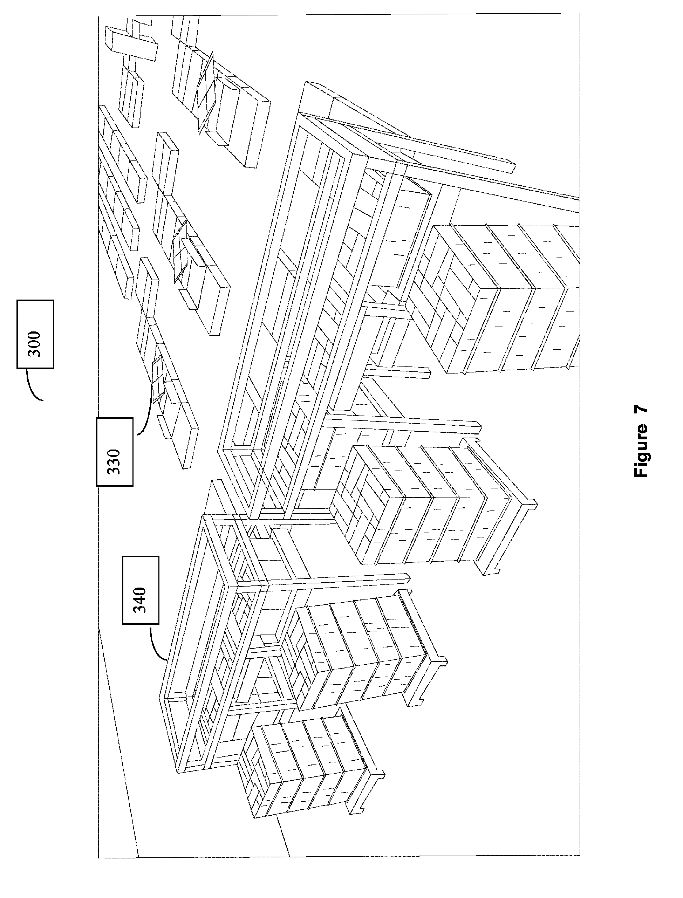

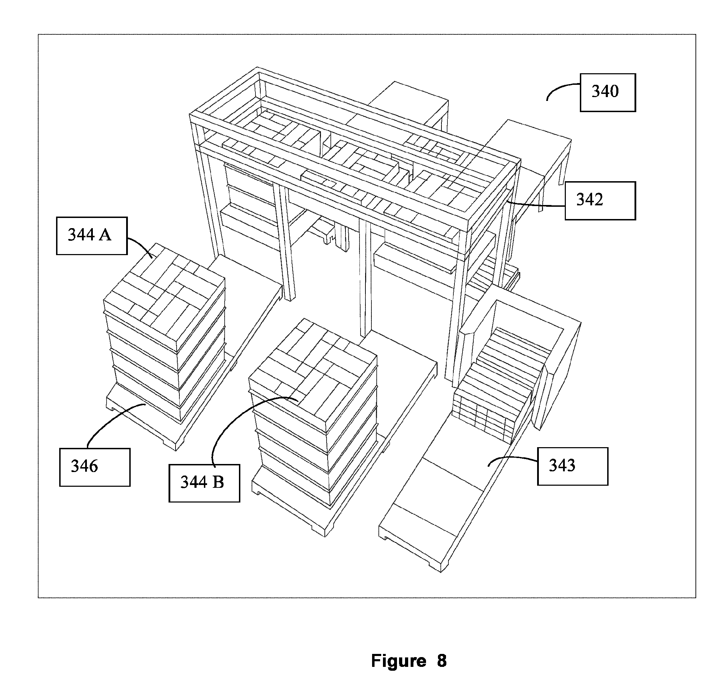

Looping back to Figure 3, the system 300 further includes layer loading stations 340. As shown in Figure 7, the layer of trays/boxes formed at the layer formation device 330 station can be further transported to one or more layer loading stations 340 over automatic conveyor belts. As shown in a close view in Figure 8, the layer loading device 340 can have one or more pick up sections configured to pick up the layer formed at the layer formation device from the infeed conveyor and stack it on the loading station. The layer loading station further includes two loading sections configured to stack the layer into a pile thereof. In some embodiments, the layer loading station 340 may include one loading section which is very well known in art and is illustrated in fig. 1(d). Accordingly, as an example, the layer loader station may include one pick up section and one loading section. However, the layer loading stations with two loading sections are preferred as they significantly improve the capacity of the layer loading stations. In another example, the layer loading station may include one or more pick up sections and two loading sections. In some embodiments, the layer loading stations may be configured to receive infeed from more than one infeed areas. In such instances, the layer loader station may handle more than one type of product at the same time. In some embodiments, the layer loading device 340 may be configured to receive infeed from more than one infeed areas. In such instances, the layer loading device 340 can handle two different products at the same time, thereby forming two piles of different products as shown in a stack 342. Further, the products can be loaded at two different loading positions 344A and 344B. According to some embodiments, the layer loading device 340 can have any number of loading positions.

In some embodiments, the products can be loaded onto pallets 346, as shown in Figure 8. In such instances, the layer loading station may be provided with a pallet dispenser 343 for transporting empty pallets to the layer loading stations 340. In some other embodiments, the system may include robots, or the like, to deliver the empty pallets to the layer loading stations whenever required. Such a robotic solution reduces the overhead of unnecessary transport of pallets when not required.

However, in some other embodiments, the products can be loaded without pallets. In such instances pallets may be placed under the stacked load at a later stage.

Apart from the components disclosed above, the system further includes a control section (not shown in fig.) for controlling the operations/handling/delivery of infeed/out feed at each of the plurality of the stations. In some embodiments, the control system includes a data capturing unit for tracking the location of a feed. The control system may further include a processor unit for processing the data captured by the data capture unit on the basis of predetermined logics / rules for facilitating the operation within the system. The control system may further include an instruction unit that delivers the instructions to various stations / robots / components within the system to facilitate a desired and smooth operation within the system.

In some embodiments, the control unit may be provided as a computer program product, such as may include a computer-readable storage medium or a non-transitory machine-readable medium maintaining instructions interpretable by a computer or other electronic device, such as to perform one or more processes. A non- transitory machine-readable medium includes any mechanism for storing information in a form (including a processing application or software) readable or interpretable by a machine (such as a computer). The non-transitory machine-readable medium may take the form of, but is not limited to, any known storage technique, including magnetic storage media, optical storage media, magneto-optical storage media; read only memory (ROM); random access memory (RAM); erasable programmable memory (including EPROM and EEPROM); flash memory; and otherwise.

According to some embodiments, the system 200 is a continuous approach production system. The approach involves production, transportation and loading of the products in a continuous manner avoiding waiting by any station for performing operations. Thus, huge amount of time can be saved as none of the devices have to wait during set up of the automatic palletizing line. All of the devices run at maximum capacity without being slowed down due to any major breakdowns of the devices; or any defects of the devices; and any regular maintenance of the devices. As the devices are not required to wait, hence there is an improvement in efficiency of 25-50% of the system 200 and around 20-30% of waiting time can be eliminated. However, in case a breakdown of a gear box or motor happens, then though a specific die cutter may run slow, however, there may not be any effect on overall production.

Of all the stations or equipments of the system 200, the converters are most expensive and run at about 30-50% of the maximum capacity due to bottlenecks at different stations. As every convertor needs all peripheral equipment, such as in and out feed conveyors, a pre feeder, separators, palletizer, evacuation systems for waste, and more, investment may further increase. However, as the present invention involves less number of converters, huge investment can be saved. Further as fewer converters require fewer operators, hence there can be large annual savings. As lesser number of converters for the same output is required, the system 200 can be installed in small buildings, requiring less space.

According to some embodiments, the system 200 is very flexible such that the system 200 can be installed in new factories, existing or old factories, or automatic systems, or robotic systems. Any of the individual devices of the system 200 can be installed anywhere. According to some embodiments, set up of new factories involve setting up of individual devices. More and more individual devices such as separators can be installed as per the requirements. However, in existing or old factories, one existing system can be dismantled and moved towards the designated area for palletizing system.

The system 200 is usable for managing operations related to palletizing of corrugated boxes in accordance with certain embodiments of the present invention.

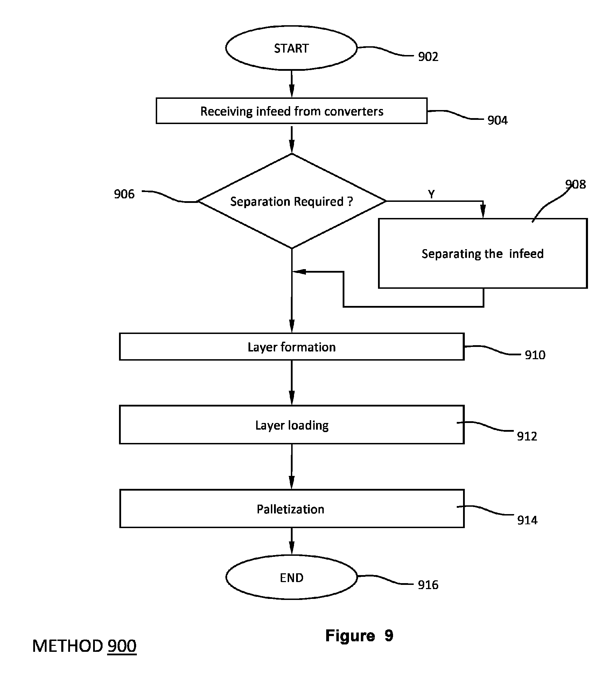

For example, FIG. 9 depicts a flow diagram for a method 900 for centralizing the palletization system of FIG. 3 at a designated location. The method 900 starts at step 902 and proceeds to step 904, where at least an infeed is received from a converter of a corrugator system to a designated location at a connected station. In an embodiment, the converter may be a die cutter device providing an infeed to the designated location at a separator station. In another embodiment, the converter may be a die cutter providing an infeed to the designated location at a layer formation station. In yet another embodiment, the converter may be a FFG and connected to the designated location at a layer formation station.

Once the infeed is received at the designated location, the method 900 moves to step 906 where the method determines if a separation operation is required to be performed for the infeed received at the designated location. In an embodiment, the separation operation is applicable only if the converter provides the infeed to one of the separation stations of the designated location. Preferably, the die cutter type of converters sends the infeed to the separator stations whereas the FFG type of converters generally does not sends the infeed to separator stations as output of such converters does not require separation operation to be performed thereon.

If at step 906, it is determined that the separation operation is required, the method proceeds to step 908 where the separation operation is performed on the infeed thereby separating the incoming undivided trays and transfers the separated stacks to layer formation stations at step 910 where the incoming stacks of trays / bundles/boxes are oriented, layered, positioned against each other to form a layer as per the requirement.

If however at step 906, it is determined that the separation operation is not required, the method proceeds directly to step 910 where the incoming trays / bundles / boxes are oriented / layered / positioned against each other to form a layer as per the requirements. In an embodiment, the FFG type of converter does not require separation operation and sends the out feed boxes directly to the layer formation stations where they are worked up as per the requirements.

After the layer formation operation has been performed on the trays / boxes at step 910, the method proceeds to step 912 where the layer loading station receives the stacks of boxes / bundles via one or more infeed conveyor systems. The layer loading station performs a layer pick up operation in which the incoming boxes are picked up using a pick up section and thereafter stacked and using a loading section. In an embodiment, the layer loading device can produce different stacks for different type of products received from one or more infeed conveyors. In an embodiment stacking is performed on an empty pallet supplied by a pallet dispenser or a robot, thereby performing the palletization of the stacked boxes. In another embodiment, the stacking is performed by the layer loader station without placing a pallet below the stack. In such cases, the stack is transported to a pallet at a later stage thereby performing the palletization of the stacked boxes.

Referring to FIGS. 9, methodology in accordance with a preferred embodiment of the claimed subject matter is illustrated. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

As will be readily apparent to those skilled in the art, the present invention may easily be produced in other specific forms without departing from its essential characteristics. The present embodiments is, therefore, to be considered as merely illustrative and not restrictive, the scope of the invention being indicated by the claims rather than the foregoing description, and all changes which come within therefore intended to be embraced therein. Many variations, modifications, additions, and improvements are possible. More generally, embodiments in accordance with the present disclosure have been described in the context of preferred embodiments. Functionalities may be separated or combined in procedures differently in various embodiments of the disclosure or described with different terminology. These and other variations, modifications, additions, and improvements may fall within the scope of the disclosure as defined in the appended claims.

It is further understood that a system and method in accordance with the present invention may also be used in the field of solid board converting.

## Claims

1. A palletizing system comprising a plurality of stations, each station performing at least one operation associated therewith selected from a list of operations comprising separating and/or layer loading, wherein each of the plurality of said stations provides an input to any of the other of the plurality of stations performing any of the other operations.

2. The system of claim 1, wherein the system is connected to at least one converter of a converting line of a corrugator system.

3. The system of claim 2, wherein the system is connected to at least one converter via at least one conveyor system

4. The system of claim 2, wherein the converter of the converting line is a die cutter.

5. The system of claim 2, wherein the converter of the converting line is a FFG

6. The system of claim 1, wherein the plurality of stations are connected to each other via plurality of automatic conveyors.

7. The system of claim 6, wherein each of the plurality of automatic conveyors is configured to deliver feed from one station performing one operation to at least one of the other stations performing another operation.

8. The system of claim 1, wherein the plurality of stations comprises one or more layer formation stations associated with a layer formation operation.

9. The system of claim 1, wherein a separating station configured for a separation operation comprises a front separator connected to one or more back separators in different possible configurations.

10. The system of claim 1, wherein a layer loader station configured for a loading operation comprises one or more pick up section and one or more loading sections.

11. The system of claim 10, wherein the system comprises one or more pallet dispensers connected to each layer loading station.

12. The system of claim 11, wherein the pallet dispensers are configured to deliver empty pallets to the layer loading station.

13. The system of claim 1, wherein the operations are centralized in a specifically designated location.

14. The system of claim 1, wherein number of stations for a particular operation is independent of the number of stations for any other operation.

15. The system of claim 1, wherein system comprises a control system for controlling the operations/handling/delivery of infeed/out feed at each of the plurality of the stations.

16. The system of claim 15, wherein the control system comprises a data capturing unit for tracking the location of a feed; a processor unit for processing the data received and an instructor unit for delivering handling/operation instructions to the palletizing system .

17. A method for palletizing comprising:
receiving an infeed from at least one converter to a designated location, the designated location comprising a plurality of stations, each station performing at least one operation associated therewith as selected from a list of operations comprising separating and/or layer loading;
Wherein each of the plurality of said stations provides an input for any of the other of the plurality of stations to any of the other operations.

18. The method of claim 17, wherein the designated location receives the infeed from at least one converter via at least one conveyor system.

19. The method of claim 17, wherein each station performing one operation provides input to at least one of the other stations performing another operation via automatic conveyor systems

20. The method of claim 17, wherein the converter is a die cutter.

21. The method of claim 17, wherein the converter is a FFG

22. The method of claim 17, wherein the plurality of stations comprises one or more layer formation stations for performing a layering operation.

23. The method of claim 17, wherein the method comprises controlling the operations/handling/delivery of infeed/out feed at each of the plurality of the stations by means of a control system.

24. The method of claim 23, wherein controlling comprises tracking the location of a feed by means of a data capturing unit; processing the received location data by means of a processor unit and delivering handling/operation instructions to the palletizing system by means of an instructor unit.
